# EUROPÄISCHE PATENTANMELDUNG

(11) **EP 1 049 043 A1**
(43) Veröffentlichungstag der Anmeldung: **02.11.2000**
(21) Anmeldenummer: 99108708.1
(22) Anmeldetag: 30.04.1999
(51) Int. Cl.: G06K 19/077

(54) **Chip-Träger-Verbund**

(71) Anmelder: SIEMENS AKTIENGESELLSCHAFT, 80333 München (DE)
(72) Erfinder: Reiner, Robert, 85579 Neubiberg (DE)

(57) **Zusammenfassung**

Die Erfindung betrifft einen Chip-Träger-Verbund (1), in welchem ein Halbleiterchip (2) in einem dünnen Trägermaterial (3) dadurch eingebettet ist, daß der Halbleiterchip in einer Ausnehmung (4) im Trägermaterial angeordnet wird. Die Ausnehmung ist zumindest auf einer Seite des Trägermaterials mit einem Abdeckpad (5) bedeckt, dessen Randbereiche (6) auf dem Trägermaterial befestigt sind. Der Halbleiterchip wiederum ist auf dem Abdeckpad befestigt.

## Beschreibung

Die Erfindung betrifft einen Chip-Träger-Verbund, in welchem ein Halbleiterchip in einem dünnen Trägermaterial eingebettet ist. Trägermaterialien können beispielsweise Papier oder dünne Kunststoffolien sein.

Bekannt sind beispielsweise Chip-Träger-Verbünde, bei denen dünne Halbleiterchips während des Schöpfens in ein Papier eingebettet werden. Derartige Verbünde haben jedoch einige Nachteile. Zum einen ist die Herstellung der Verbünde nur beim Herstellers des Trägermaterials, hier beim Papierhersteller, möglich. Zum anderen ist der Halbleiterchip in den Verbünden nur schlecht gegen Einflüsse von außen geschützt.

Um in Papier oder sonstiges Trägermaterial eingebettet werden zu können, muß der Halbleiterchip sehr dünn sein. Er ist deshalb sehr bruchgefährdet. Außerdem bietet das den Halbleiterchip umgebende Trägermaterial nur unzureichenden Schutz gegen Einwirkungen von außen, seien es solche mechanischer oder chemischer Natur, Temperatureinflüsse oder elektrische Einwirkungen.

Ein weiterer Nachteil besteht darin, daß der Halbleiterchip im Trägermaterial nur schwer exakt zu positionieren ist.

Aufgabe der Erfindung ist es, einen Chip-Träger-Verbund anzugeben, welcher auf einfache Art und Weise und unabhängig vom Ort der Herstellung des Trägermaterials herstellbar ist und in welchem der Halbleiterchip möglichst gut gegen negative äußere Einflüsse geschützt und zudem in einer vorgegebenen Position im Trägermaterial exakt positioniert ist.

Die Lösung der Aufgabe gelingt mit dem Chip-Träger-Verbund gemäß Anspruch 1. Bevorzugte Varianten des Verbundes sind in den Unteransprüchen beschrieben.

In dem erfindungsgemäßen Chip-Träger-Verbund ist ein Halbleiterchip in ein dünnes Trägermaterial auf die Weise eingebettet, daß der Halbleiterchip in einer Ausnehmung, welche sich über die gesamte Dicke des Trägermaterials erstreckt, angeordnet ist. Die Ausnehmung ist zumindest auf einer der Seiten des Trägermaterials mit einem Abdeckpad bedeckt. Die Randbereiche dieses Abdeckpads sind auf dem Trägermaterial befestigt. Der in der Ausnehmung des Trägermaterials angeordnete Halbleiterchip wiederum ist auf dem Abdeckpad befestigt.

Bevorzugt werden zu beiden Seiten des Halbleiterchips Abdeckpads an dem Trägermaterial befestigt.
Die Befestigung der Abdeckpads und/oder des Halbleiterchips erfolgt zweckmäßig mit einem Klebstoff. Besonders bevorzugt ist es, wenn selbstklebende Abdeckpads verwendet werden, die auch als Klebeflicken bezeichnet werden könnten.

Die erfindungsgemäße Anordnung des Halbleiterchips im Trägermaterial hat einerseits den Vorteil, daß der Halbleiterchip sehr exakt positioniert werden kann, da die Ausnehmung im Trägermaterial mit hoher Genauigkeit herstellbar ist. Zweckmäßig ist die Ausnehmung nur minimal größer als die Grundfläche des einzusetzenden Halbleiterchips, so daß dieser nach dem Einsetzen in der gewünschten Position im Verbund angeordnet ist.

Ein weiterer Vorteil besteht andererseits darin, daß der Halbleiterchip dicker sein kann, als dies bei den Halbleiterchips der Fall war, welche während des Papierschöpfens in den Papierträger eingebettet wurden. Es ist beispielsweise möglich, einen Chip mit einer dickeren Passivierung zu versehen, die den Halbleiterchip besser gegen chemische oder mechanische Einflüsse von außen schützt, da die Ausnehmung im Trägermaterial auch für einen dickeren Chip Platz bietet.

Der Schutz gegen mechanische oder chemische Einflüsse kann weiterhin dadurch verbessert werden, daß für die Abdeckpads geeignete Materialien gewählt werden. Die Auswahl kann beispielsweise so erfolgen, daß die Abdeckpads den Bereich des Chip-Träger-Verbundes, in welchem sich der Chip befindet, versteifen und so den Chip zusätzlich vor Bruch schützen. Außerdem ist es möglich, die Abdeckpads aus einem möglichst undurchlässigen Material zu fertigen. Auf diese Weise kann der Einfluß von Chemikalien auf den Halbleiterchip deutlich vermindert werden, die Diffusion von Ionen zum Chip wird verhindert.

Grundsätzlich geeignete Materialien für die Abdeckpads sind Papier oder Kunststoffolie. Besonders geeignet sind solche Folien, die zur Herstellung von Hologrammen bei Chipkarten oder sonstigen Anwendungen eingesetzt werden.

Als Trägermaterial kann grundsätzlich jedes Material verwendet werden, in welches bereits bisher Halbleiterchips eingebettet wurden. Beispielhaft können Papier oder dünne Kunststoffolien genannt werden.

Um einen besonders steifen und festen Verbund zu erhalten und um die Dicke des Verbundes durch das Aufbringen der Abdeckpads nicht zu stark zu erhöhen, kann es bevorzugt sein, das wenigstens eine Abdeckpad in das Trägermaterial einzudrücken. Zweckmäßig wird das wenigstens eine Abdeckpad so weit in das Trägermaterial eingedrückt, daß der Chip-Träger-Verbund eine im wesentlichen plane Oberfläche erhält. Die Dicke des Halbleiterchips ist in diesem Fall zweckmäßig geringer als die Dicke des Trägermaterials.

Als Halbleiterchips für den erfindungsgemäßen Chip-Träger-Verbund eignen sich insbesondere solche, welche eine kontaktlose Datenübertragung zu einem Lese/Schreibgerät ermöglichen. Derartige Halbleiterchips sind grundsätzlich bekannt. Sie weisen üblicherweise eine Spule auf einer der Chipoberflächen auf ("coil on chip").

Zum Schutz gegen elektrische, elektrostatische oder elektromagnetische Einflüsse kann das wenigstens eine Abdeckpad des erfindungsgemäßen Chip-Träger-Verbundes leitfähig sein. Beispielsweise ist es möglich, das Abdeckpad mit einer leitfähigen, insbesondere einer metallischen, Schicht zu versehen. Die leitfähige Schicht kann die gesamte Oberfläche des Abdeckpads bedecken. Im folgenden sollen unter leitfähigen Schichten aber auch solche Schichten verstanden werden, welche nur einen Teil der Fläche des Abdeckpads einnehmen.

Beispielsweise kann die leitfähige Schicht auf dem Abdeckpad in Form einer Spule ausgebildet sein, welche mit einer Spule auf dem Halbleiterchip induktiv gekoppelt ist. Da das Abdeckpad eine größere Oberfläche aufweist als der Halbleiterchip, kann auch die Spule, wenn sie im Randbereich des Abdeckpads verläuft, größer sein als die Spule auf der Chipoberfläche. Mit Hilfe der Spule auf dem Abdeckpad kann also erreicht werden, daß die Spule auf dem Halbleiterchip in einem verstärkten Feld liegt.

Andererseits ist es möglich, die leitfähige Schicht auf dem Abdeckpad in Form eines Bandes auszubilden, welches den Halbleiterchip im wesentlichen vollständig umläuft. Insbesondere kann die leitfähige Schicht in Form eines ringförmigen Bandes gestaltet sein, welches außerhalb desjenigen Bereiches verläuft, mit welchem das Abdeckpad den Halbleiterchip bedeckt. Das leitfähige Band kann im Falle einer elektrostatischen Entladung den Strom um den Chip herumführen und so dessen Zerstörung verhindern. Arbeitet der Chip mit induktiver Übertragung, kann es zweckmäßig sein, das leitfähige Band nicht in sich geschlossen um den Halbleiterchip herumzuführen, sondern in Umfangsrichtung eine Unterbrechung des Bandes vorzusehen.

Ein weiterer Schutz gegen mechanische Beanspruchungen kann dadurch erreicht werden, daß im Trägermaterial im Bereich um die Ausnehmung, in welcher der Halbleiterchip angeordnet ist, Poren oder Durchgangsöffnungen vorhanden sind. Diese Poren oder Durchgangsöffnungen führen zu einer Versteifung des Trägermaterials in diesem Bereich.
Besonders zweckmäßig ist es, wenn die Poren oder Durchgangsöffnungen mit Klebstoff gefüllt sind, da dies zusätzliche Steifigkeit verleiht. Verwendet man als Klebstoff einen leitfähigen Klebstoff, kann zusätzlich eine leitende Verbindung zwischen sich gegenüberliegenden Abdeckpads erreicht werden. Diese Variante ist besonders zweckmäßig, wenn durch die mit leitfähigem Klebstoff gefüllten Poren oder Durchgangsöffnungen eine leitende Verbindung zwischen leitfähigen Bereichen sich gegenüberliegender Abdeckpads hergestellt wird. Beispielsweise können auf die beschriebene Art und Weise elektrisch leitfähige Bänder miteinander kontaktiert werden, die auf zwei zu beiden Seiten des Halbleiterchips angeordneten Abdeckpads vorhanden sind.

Die Erfindung soll nachfolgend am Beispiel einer Zeichnung näher erläutert werden. Darin zeigen schematisch
- Fig. 1 bis 5: Beispiele erfindungsgemäßer Chip-Träger-Verbünde im Querschnitt und
- Fig. 6: den erfindungsgemäßen Chip-Träger-Verbund gemäß Fig. 4 in Draufsicht.

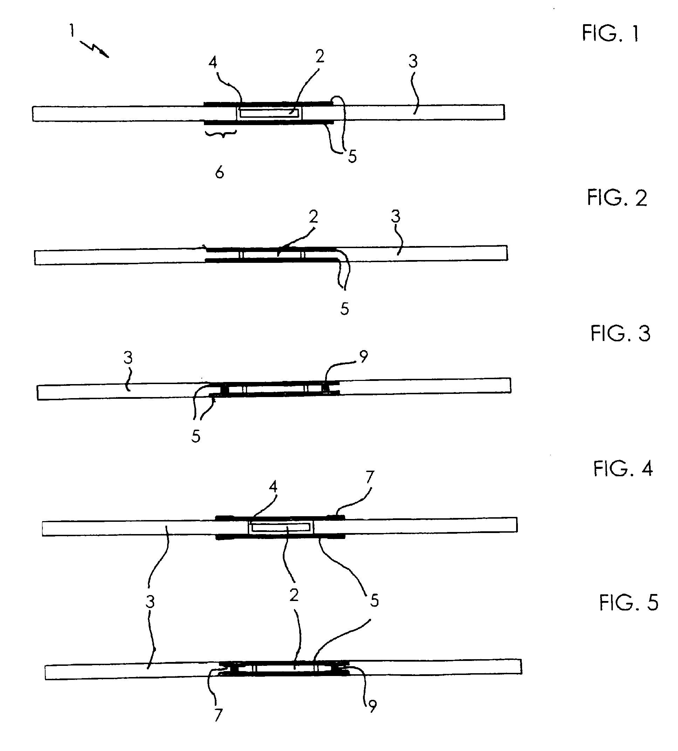

Fig. 1 zeigt ein erstes Beispiel eines erfindungsgemäßen Chip-Träger-Verbundes 1 im Querschnitt durch den Bereich, in welchem der Halbleiterchip 2 angeordnet ist. Der Halbleiterchip 2 befindet sich in einer Ausnehmung 4, welche in das Trägermaterial 3, hier ein dünnes Papier, eingestanzt wurde.

Die Ausnehmung 4 ist nur geringfügig größer als die Außenkontur des Halbleiterchips 2. Auf diese Weise ist eine sehr genaue Positionierung des Halbleiterchips im Trägermaterial möglich. Der Halbleiterchip ist mit Hilfe von zwei Abdeckpads 5 im Trägermaterial fixiert. Die Abdeckpads 5 sind ober- und unterseitig des Halbleiterchips 2 auf das Trägermaterial 3 aufgeklebt, wobei die Randbereiche 6 der Abdeckpads mit dem Trägermaterial verbunden sind, die Mittelbereiche mit dem Halbleiterchip. Im gezeigten Fall sind die Abdeckpads selbstklebend, die Klebeschicht ist jedoch nicht eingezeichnet. Zweckmäßig wird das in der Figur untere Abdeckpad vor dem Einsetzen des Halbleiterchips in die Ausnehmung am Trägermaterial befestigt, das obere der Abdeckpads nach dem Einsetzen des Halbleiterchips.

Fig. 2 zeigt einen erfindungsgemäßen Chip-Träger-Verbund, welcher im wesentlichen demjenigen aus Fig. 1 entspricht. Gleich Bezugszeichen bezeichnen in dieser und allen nachfolgenden Figuren gleiche Teile wie in Fig. 1. Bereits beschriebene Einzelheiten sollen zur Vermeidung von Wiederholungen nicht mehr erwähnt werden. Die Abdeckpads 5 sind, im Unterschied zum Verbund vom Fig. 1, in das Trägermaterial 3 eingedrückt, so daß der Chip-Träger-Verbund 1 auf Ober- und Unterseite jeweils eine im wesentlichen plane Oberfläche erhält. Durch das Einpressen der Abdeckpads kann zusätzlich eine erhöhte Steifigkeit des Verbunds und eine noch sicherere Befestigung des Halbleiterchips erreicht werden.

Zur weiteren Erhöhung der Steifigkeit sind in dem Chip-Träger-Verbund gemäß Fig. 3 im Trägermaterial 3 im Bereich um die Ausnehmung 4 Durchgangsöffnungen 9 angeordnet. Diese Durchgangsöffnungen sind mit Klebstoff gefüllt, der beim Zusammenpressen der Abdeckpads in die Durchgangsöffnungen gedrückt wird.

Fig. 4 zeigt ein weiteres Beispiel eines erfindungsgemäßen Chip-Träger-Verbundes, welcher erneut weitgehend demjenigen in Fig. 1 entspricht. Zusätzlich ist jedoch auf jedem der Abdeckpads 5 in dessen Randbereich ein leitfähiges Band 7 angeordnet. Im Chip-Träger-Verbund gemäß Fig. 4 verlaufen die leitfähigen Bänder 7 jeweils auf der Seite des Abdeckpads 5, welche dem Halbleiterchip 2 abgewandt ist.

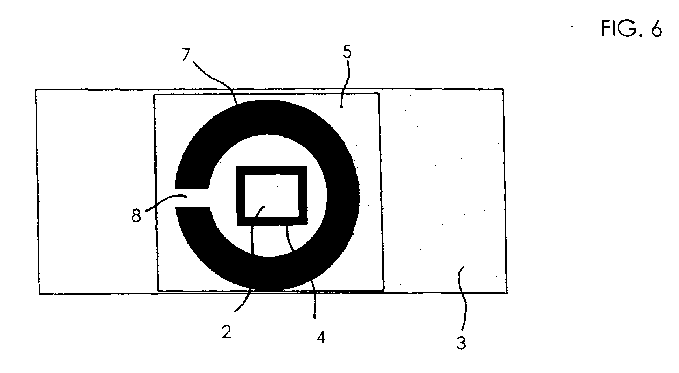

Im Chip-Träger-Verbund gemäß Fig. 5 sind die leitfähigen Bänder 7 dagegen jeweils auf der Seite des Abdeckpads 5 angebracht, welche in Richtung auf den Halbleiterchip 2 weist. In beiden in Fig. 4 und 5 gezeigten Fällen ist das leitfähige Band 7 ringförmig ausgebildet, was Fig. 6 zu entnehmen ist, welche eine Draufsicht auf den Verbund gemäß Fig. 4 zeigt. Die Bänder 7 sind jedoch nicht vollständig geschlossen, sondern weisen in Umfangsrichtung eine Unterbrechung 8 auf. Auf diese Weise kann verhindert werden, daß die leitfähigen Ringe 7 die induktive Übertragung zwischen Halbleiterchip und einem Lese/Schreibgerät negativ beeinflussen. Die leitfähigen Bänder 7 dienen dem Schutz des Halbleiterchips vor Zerstörung durch elektrostatische Entladung.

Die in Fig. 5 gezeigte Ausführungsform hat weiterhin den Vorteil, daß die ringförmigen leitfähigen Bänder 7 der sich gegenüberliegenden Abdeckpads 5 elektrisch miteinander kontaktiert sind. Dies geschieht mit Hilfe der Durchgangsöffnungen 9 im Trägermaterial 3, welche mit einem elektrisch leitfähigen Klebstoff gefüllt sind.

## Patentansprüche

1. Chip-Träger-Verbund (1), in welchem ein Halbleiterchip (2) in einem dünnen Trägermaterial (3) eingebettet ist,
**dadurch gekennzeichnet,**
daß der Halbleiterchip (2) in einer Ausnehmung (4) im Trägermaterial angeordnet ist, die Ausnehmung auf zumindest einer der Seiten des Trägermaterials mit einem Abdeckpad (5) bedeckt ist, dessen Randbereiche (6) auf dem Trägermaterial (3) befestigt sind, und der Halbleiterchip (2) auf dem Abdeckpad (5) befestigt ist.

2. Chip-Träger-Verbund gemäß Anspruch 1,
**dadurch gekennzeichnet,**
daß zu beiden Seiten des Trägermaterials (3) Abdeckpads (5) befestigt sind.

3. Chip-Träger-Verbund gemäß Anspruch 1 oder 2,
**dadurch gekennzeichnet,**
daß Abdeckpad (5) und/oder Halbleiterchip (2) mit einem Klebstoff befestigt sind.

4. Chip-Träger-Verbund gemäß einem der Ansprüche 1 bis 3,
**dadurch gekennzeichnet,**
daß das Trägermaterial (3) aus Papier oder einer Kunststoffolie besteht.

5. Chip-Träger-Verbund gemäß einem der Ansprüche 1 bis 4,
**dadurch gekennzeichnet,**
daß das wenigstens eine Abdeckpad (5) aus Papier oder Kunststoffolie besteht.

6. Chip-Träger-Verbund gemäß einem der Ansprüche 1 bis 5,
**dadurch gekennzeichnet,**
daß das wenigstens eine Abdeckpad (5) in das Trägermaterial (3) eingedrückt ist.

7. Chip-Träger-Verbund gemäß einem der Ansprüche 1 bis 6,
**dadurch gekennzeichnet,**
daß der Halbleiterchip (2) mit einer Spule zur induktiven Daten- oder Signalübertragung ausgestattet ist.

8. Chip-Träger-Verbund gemäß einem der Ansprüche 1 bis 7,
**dadurch gekennzeichnet,**
daß das wenigstens eine Abdeckpad (5) leitfähig und insbesondere mit einer leitfähigen Schicht versehen ist.

9. Chip-Träger-Verbund gemäß Anspruch 8,
**dadurch gekennzeichnet,**
daß die leitfähige Schicht in Form einer Spule ausgebildet ist, welche mit einer Spule auf dem Halbleiterchip (2) induktiv gekoppelt ist.

10. Chip-Träger-Verbund gemäß Anspruch 8,
**dadurch gekennzeichnet,**
daß die leitfähige Schicht in Form eines Bandes, insbesondere eines ringförmigen Bandes (7), ausgebildet ist, welches außerhalb desjenigen Bereiches des Abdeckpads (5) verläuft, der den Halbleiterchip (2) bedeckt, und den Halbleiterchip im wesentlichen vollständig umschließt.

11. Chip-Träger-Verbund gemäß Anspruch 10,
**dadurch gekennzeichnet,**
daß das Band (7) in Umfangsrichtung eine Unterbrechung (8) aufweist.

12. Chip-Träger-Verbund gemäß einem der Ansprüche 1 bis 11,
**dadurch gekennzeichnet,**
daß im Trägermaterial (3) im Bereich um die Ausnehmung (4) Poren oder Durchgangsöffnungen (9) vorhanden sind.

13. Chip-Träger-Verbund gemäß Anspruch 12,
**dadurch gekennzeichnet,**
daß die Poren oder Durchgangsöffnungen (9) mit Klebstoff, insbesondere einem leitfähigen Klebstoff, gefüllt sind.
